# EUROPÄISCHE PATENTSCHRIFT

(11) **EP 3 396 733 B1**
(45) Veröffentlichungstag und Bekanntmachung des Hinweises auf die Patenterteilung: **19.06.2019**
(21) Anmeldenummer: 17167942.6
(22) Anmeldetag: 25.04.2017
(51) Int. Cl.: H01M 2/02

(54) **SYSTEM BESTEHEND AUS EINER AUFNAHMEEINRICHTUNG UND IN DER AUFNAHMEEINRICHTUNG ANZUORDNENDEN ENERGIESPEICHERN, AUFNAHMEEINRICHTUNG UND TRÄGER ZUR AUFNAHME VON ENERGIESPEICHERN**
SYSTEM COMPRISING A RECEPTACLE FOR THE DEVICE AND ENERGY STORAGE DEVICES IN THE RECEPTACLE, RECEPTACLE AND HOLDER FOR HOLDING ENERGY STORAGE DEVICES
SYSTÈME CONSTITUÉ D'UN DISPOSITIF DE RÉCEPTION ET ACCUMULATEURS D'ÉNERGIE À DISPOSER DANS UN DISPOSITIF DE RÉCEPTION, DISPOSITIF DE RÉCEPTION ET SUPPORTS DE RÉCEPTION D'ACCUMULATEURS D'ÉNERGIE

(43) Veröffentlichungstag der Anmeldung: 31.10.2018
(73) Patentinhaber: HOPPECKE Batterien GmbH & Co. KG., 59929 Brilon (DE)
(72) Erfinder: Kesper, Heinrich, 34508 Willingen (DE)
(74) Vertreter: Rausch Wanischeck-Bergmann Brinkmann

(56) Entgegenhaltungen:
- EP-B1- 0 922 308
- DE-U1-202007 012 635
- US-A- 4 425 412
- US-B1- 6 641 951

## Beschreibung

Die Erfindung betrifft ein System bestehend aus einer Aufnahmeeinrichtung und in der Aufnahmeeinrichtung anzuordnenden Energiespeichern, insbesondere wiederaufladbare Batterien, jeweils mit einem, Seitenwände aufweisenden Gehäuse, in dem zu den Seitenwänden parallel verlaufend ausgerichtete Elektrodenplatten und einen gebundenen Elektrolyt aufweisende Vliese angeordnet sind, wobei die Elektrodenplatten zwischen benachbarten Vliesen angeordnet sind, wobei die Aufnahmeeinrichtung aus zumindest zwei übereinander angeordneten Trägern für die Aufnahme von Energiespeichern in der Art besteht, dass die parallel zu den Elektrodenplatten ausgerichteten Seitenwände der Gehäuse im Wesentlichen horizontal verlaufend ausgerichtet sind.

Aus dem Stand der Technik sind Systeme bekannt, die aus einer regalartigen Aufnahmeeinrichtung bestehen, wobei die Aufnahmeeinrichtung mehrere Ebenen aufweist, die der Aufnahme von Energiespeichern, insbesondere wiederaufladbaren Batterien dienen. Beispielsweise ist eine solche Aufnahmeeinrichtung aus der DE 20 2007 012 635 U1 bekannt. Diese vorbekannte Aufnahmeeinrichtung hat sich an sich im Stand der Technik bewährt und ist Bestandteil eines Energieversorgungssystems zur Versorgung von Deichselhubwagen mit elektrischer Energie, wobei diese austauschbare Batterien aufweisen, die in einem solchen Energieversorgungsystem aufgeladen werden.

In zunehmendem Maße finden wiederaufladbare Batterien Verwendung die aus einem Gehäuse mit Seitenwänden bestehen. In dem Gehäuse sind parallel verlaufend ausgerichtete Elektrodenplatten und zumindest ein Vlies angeordnet, in dem ein gebundener Elektrolyt vorgesehen ist. Die Elektrodenplatten sind zwischen benachbarten Vliesen angeordnet. Derartige Batterien werden auch als "AGM"-Batterien bezeichnet. Für eine langlebige Verwendbarkeit derartiger AGM-Batterien ist es erforderlich, dass stets ein Flächenkontakt zwischen den einzelnen Elektrodenplatten und den dazwischen angeordneten und mit Elektrolyt bestückten Vliesen gegeben ist. Um dies sicherzustellen werden Plattenpakete, bestehend aus den Elektrodenplatten und den Vliesen in zusammengepresstem Zustand in das Gehäuse der Batterie eingesetzt. Es hat sich jedoch gezeigt, dass im bestimmungsgemäßen Verwendungsfall die Gehäuse der Batterien ausbeulen können, da sie dem Innendruck nicht standhalten. Diese Ausbeulung führt dazu, dass die zusammengepresste Anordnung der Elektrodenplatten und Vliese nicht aufrechterhalten wird und zwar mit dem negativen Effekt, dass der Kontakt zwischen den Elektrodenplatten und den Vliesen nachlässt, wodurch sich eine deutliche Verminderung der Lebenszeit solcher Batterien ergibt. Der Druck innerhalb eines Gehäuses dieser Batterien kann beispielsweise während eines Ladezyklusses steigen.

Aus dem Stand der Technik ist gemäß der US 6,641,951 B1 ferner eine Batteriezellenschalenanordnung mit einem Batteriegehäuse bekannt, welches dazu dient, mehrere zu einem Stapel miteinander kombinierte Blei-Säure-Batteriezellen aneinandergepresst aufzunehmen. Um zu vermeiden, dass es zu einem Ausbeulen der seitlichen Seitenwände des die Batteriezellen aufnehmenden Batteriegehäuses kommt, ist eine Rückhalteeinrichtung vorgesehen, die sich horizontal zwischen den Seitenwänden des Gehäuses erstreckt und an diesen befestigt ist. Damit stützen sich die Seitenwände des Gehäuses gegeneinander ab, womit ein merkliches Ausbeulen der Seitenwände nach außen vermieden.

Aus der EP 0 922 308 B1 ist darüber hinaus noch ein Batteriezellenträger für abgedichtete Blei-Säurezellen bekannt. Mehrerer solcher Zellenträger sind zur Bildung einer modularen Baugruppe übereinander gestapelt angeordnet, wobei jeder Zellenträger ein Unterteil, aufrechtstehende Seitenwände und ein Oberteil aufweist. Wenigstens eine der Seitenwände weist an das Oberteil und das Unterteil angrenzende Verriegelungen auf, wobei die Verriegelung eines Zellenträgers in eine Verriegelung eines in Höhenrichtung darüber gestapelten zweiten Zellenträgers eingreift. In zwei ineinandergreifende Verriegelungen ist ein Haltebolzen verschiebbar eingesetzt, womit eine positionssichere Übereinanderstapelung der mehreren Zellenträger erreicht ist.

Ausgehend von diesem Stand der Technik und zur Vermeidung der voranstehend beschriebenen Nachteile ist es **Aufgabe** der Erfindung ein gattungsgemäßes System derart auszubilden, dass ein Ausbeulen der Gehäuse der Batterien möglichst unterbunden wird und das System möglichst konstruktiv einfach aus wenigen Bauteilen aufgebaut ist.

Derartige Systeme werden im Übrigen zunehmend auch dazu verwendet, Strom aus erneuerbaren Energien, insbesondere Solarstrom zu speichern, um diesen Strom nachfolgend, dass heißt zu einem späteren Bedarfszeitpunkt abrufen zu können.

Zur **Lösung** der voranstehenden Aufgabenstellung ist bei einem erfindungsgemäßen System vorgesehen, dass zwischen den Trägern zumindest ein Druckelement angeordnet ist, das auf den Seitenwänden der Gehäuse der Energiespeicher aufliegt und zumindest eine Gewichtskraft der in der Aufnahmeeinrichtung oben angeordneten Energiespeicher auf Energiespeicher überträgt, die unterhalb der oben angeordneten Energiespeicher angeordnet sind, wobei die Träger im Längsschnitt U-förmig ausgebildet sind und jeweils einen Steg und zwei daran rechtwinklig angeordnete Schenkel aufweisen, die über ein Aussteifungselement verbunden sind, wobei das Druckelement als in Längsrichtung des Trägers zwischen den Schenkeln angeordnetes Profilelement ausgebildet ist, welches zumindest eine Kontaktfläche zur Auflage auf den Seitenwänden des Energiespeichers aufweist.

Bei dem erfindungsgemäßen System ist damit vorgesehen, die Energiespeicher derart anzuordnen, dass deren Gewicht über das Druckelement ergänzend genutzt werden kann, um einem möglichen Ausbeulen des Gehäuses im Bereich der Seitenwände entgegenzuwirken. Derart ausgebildet können die Energiespeicher einen besseren Kontakt zwischen den Elektrodenplatten und den Vliesen einhalten und somit die Lebensdauer deutlich verlängern. Hierbei ist es besonders vorteilhaft, dass die konstruktive Ausgestaltung des Systems mit relativ wenigen Bauteilen einfach ausgebildet ist und dass ein solches System hinsichtlich seiner Größenanordnung in einfacher Weise variable gestaltet und an den individuellen Bedarf angepasst werden kann.

Zu diesem Zweck sind zumindest zwei übereinander angeordnete Träger vorgesehen. Jeder Träger dient dazu mehrere, beispielsweise vier Energiespeicher aufzunehmen. Zwischen den Trägern ist ein Druckelement angeordnet, welches die Gewichtskraft der im oberen Träger angeordneten Energiespeicher auf die Seitenwände der darunter angeordneten Energiespeicher überträgt, so dass diese Seitenwände ergänzend belastet sind.

Erfindungsgemäß ist vorgesehen, dass die Träger im Längsschnitt U-förmig ausgebildet sind und jeweils einen Steg und daran rechtwinklig angeordnete Schenkel aufweisen, die über ein Aussteifungselement verbunden sind und dass das Druckelement als in Längsrichtung des Trägers zwischen den Schenkeln angeordnetes Profilelement ausgebildet ist, welches zumindest eine Kontaktfläche zur Auflage auf den Seitenflächen der Energiespeicher aufweist.

Derart ausgebildet bestehen die Träger lediglich aus drei Seitenwandungen und einem Aussteifungselement, welches es ermöglicht, dass die Energiespeicher von einer Seite des Trägers zugänglich sind. Hierdurch besteht die Möglichkeit, dass einzelne Energiespeicher beispielsweise bei Defekten ausgetauscht werden können, ohne dass das gesamte System demontiert werden muss. Gegebenenfalls ist es lediglich notwendig, das mit den Schenkeln des Trägers verschraubte Aussteifungselement zu entfernen, um einzelne Energiespeicher aus einem Träger entnehmen zu können.

Desweiteren ist vorgesehen, dass das Druckelement als in Längsrichtung des Trägers zwischen den Schenkeln angeordnetes Profilelement ausgebildet ist. Das Druckelement erstreckt sich somit über die gesamte Längserstreckung des Trägers und liegt damit auf den Seitenflächen mehrerer nebeneinander im Träger angeordneten Energiespeichern auf. Die Verwendung eines Profilelementes hierfür hat den Vorteil, dass dieses durch die Profilierung ausreichend stabil ausgebildet werden kann. Um eine ausreichende Druckübertragung zu erzielen hat es sich als vorteilhaft erwiesen, dieses Profilelement mit einer Kontaktfläche auszubilden, die auf den Seitenflächen der Energiespeicher aufliegt. Vorzugsweise kann ein solches Profilelement beispielsweise als Doppel-T-Träger oder aber auch als Kastenprofil mit jeweils zwei Kontaktflächen ausgebildet sein, wobei eine Kontaktfläche auf den Energiespeichern im unteren Träger aufliegt und eine Kontaktfläche in Kontakt mit den Seitenflächen der Energiespeicher im oberen Träger steht.

Der Wechsel beziehungsweise die Bestückung eines erfindungsgemäßen Systems mit Energiespeichern wird dadurch vereinfacht, dass der Träger in einzelne Aufnahmefächer für die Energiespeicher unterteilt ist, wobei zwischen den Aufnahmefächern insbesondere plattenförmige Trennelemente angeordnet sind. Durch die Trennelemente werden die einzelnen Aufnahmefächer ausgebildet und gegeneinander abgegrenzt. Die Trennelemente, die vorzugsweise plattenförmig ausgebildet sind können aber auch noch der Versteifung des Trägers dienen. Zu diesem Zweck können die Trennelemente in Führungen, beispielsweise an der Längswand des Trägers geführt und dort gegebenenfalls auch befestigt werden. Desweiten können sich die Trennelemente auch im Bereich des Aussteifungselements abstützen.

Vorzugsweise sind die übereinander angeordneten Träger derart miteinander verbindbar, dass eine Relativbewegung der benachbart angeordneten Träger ausgeschlossen ist. Dies kann beispielsweise dadurch erfolgen, dass die übereinander angeordneten Träger formschlüssig ineinandergreifende Verbindungselemente, beispielsweise vorspringende Kantenbereiche und korrespondierende Aufnahmen ausweisen. Eine solche Ausgestaltung hat insbesondere den Vorteil, dass das System im Wesentlichen ohne ergänzende Schrauben aufgebaut werden kann, da die miteinander verbundenen Träger in ihrer Position zueinander festgelegt sind und damit nicht ergänzend fixiert werden müssen. Ergänzend kann das System oberhalb des obersten Trägers der Aufnahmeeinrichtung eine Abdeckung aufweisen, die ein Druckelement aufweist, das auf den Seitenwänden der Energiespeicher der obersten Träger aufliegt und eine Gewichtskraft der Abdeckung zumindest auf die Energiespeicher im obersten Träger überträgt. Durch die Wahl einer entsprechenden Blechstärke kann das Gewicht der Abdeckung derart eingestellt werden, dass die Gewichtskraft dieser Abdeckung ausreichend ist, um ein Ausbeulen der Gehäuse der darunter in einem Träger angeordneten Energiespeicher zuverlässig zu verhindern. Selbstverständlich kann auch bei Verwendung einer Abdeckung mit relativ geringer Blechstärke, womit auch ausgeführt ist, dass hier eine Abdeckung aus Metall vorzuziehen ist, durch Zusatzgewichte in seinem Gewicht erhöht werden. Das in der Abdeckung ausgebildete Druckelement kann mit einem Druckelement übereinstimmen, wie es auch zwischen den Trägern angeordnet ist. In Ergänzung hierzu oder alternativ ist der oberste Träger selbst mit einem Druckelement ausgerüstet. Im endmontierten Zustand drücken vom obersten Träger aufgenommene Energiespeicher von unten gegen das vom obersten Träger bereitgestellte Druckelement.

Ergänzend kann bei dem erfindungsgemäßen System vorgesehen sein, dass die Träger im Bereich von freien Enden der Schenkel mit einer Frontabdeckung verschließbar sind. Eine solche Frontabdeckung hat nicht nur Vorteile bei der ästhetischen Gestaltung eines Systems, sondern deckt auch die Energiespeicher zum Schutz gegen Umwelteinflüsse und/oder Manipulationen ab. Zu diesem Zweck kann beispielsweise vorgesehen sein, dass die Frontabdeckung über ein Schließsystem mit dem System verbunden ist, so dass nur Personen mit dem entsprechend zutreffenden Schlüssel die Frontabdeckung entfernen können. Gleiches gilt natürlich auch dahingehend, dass die Frontabdeckung mit Befestigungselementen ausgebildet ist, die bestimmte Werkzeuge zum Öffnen benötigen, welche ebenfalls nur bestimmten Personen zugänglich gemacht werden können.

Weiterhin ist es vorgesehen, dass die Aufnahmeeinrichtung einen Sockel aufweist, der unter dem Träger angeordnet ist und der ein Widerlager mit einer Kontaktfläche für die in dem auf dem Sockel angeordneten Träger angeordneten Energiespeicher aufweist, wobei die Kontaktfläche zur Anlage an den Seitenflächen der Energiespeicher vorgesehen ist. Der Sockel kann beispielsweise eine gegenüber den Trägern vergrößerte Grundfläche aufweisen, um die Stabilität des Systems zu erhöhen. Auch zwischen dem Sockel und dem darauf angeordneten Träger ist eine Verbindung vorgesehen, die eine Relativbewegung des Sockels zum Träger ausschließt. Es können wiederum formschlüssig ineinandergreifende Verbindungselemente, insbesondere vorspringende Kantenbereiche und korrespondierende Aufnahmen vorgesehen sein. Das Widerlager in dem Sockel kann übereinstimmend mit dem Druckelement zwischen zwei Trägern oder zwischen einem Träger und der Abdeckung ausgebildet sein.

Hinsichtlich einer Aufnahmeeinrichtung ist vorgesehen, dass zwischen den Trägern zumindest ein Druckelement angeordnet ist, das auf die Seitenwände der Energiespeicher auflegbar ist und zumindest eine Gewichtskraft der in dem oberen Träger angeordneten Energiespeicher auf Energiespeicher überträgt, die in dem unterhalb des oberen Trägers angeordneten Träger angeordnet sind, wobei die parallel zu den Elektrodenplatten ausgerichteten Seitenwände der Gehäuse im Wesentlichen horizontal verlaufend ausgerichtet sind. Es wird diesbezüglich auf die voranstehende Beschreibung der Vorteile eines erfindungsgemäßen Systems verwiesen.

Hinsichtlich eines Trägers ist vorgesehen, dass ein solcher Träger aus einem im Längsschnitt U-förmig ausgebildeten Gehäuse besteht, das einen Steg und zwei daran rechtwinklig angeordnete Schenkel aufweist, die über ein Aussteifungselement verbunden sind. Desweiteren ist ein Druckelement vorgesehen, das als in Längsrichtung des Träger zwischen den Schenkeln angeordnetes Profilelement ausgebildet ist, wobei das Druckelement derart angeordnet ist, dass es auf den Seitenwänden der Energiespeicher auflegbar ist und zumindest eine Gewichtskraft auf die Seitenwände der Energiespeicher überträgt. Selbstverständlich kann auch ein solches Profilelement mit einem entsprechenden Gewicht ausgebildet sein, welches seinerseits bereits einem Ausbeulen des Gehäuses der Energiespeicher im Bereich dieser Seitenwände entgegenwirkt. Ein Kastenprofil kann beispielsweise mit einem Material hoher Rohdichte ausgefüllt werden.

Weitere Merkmale der Erfindung ergeben sich aus der nachfolgenden Beschreibung der zugehörigen Zeichnung sowie aus den weiteren Unteransprüchen. In der Zeichnung zeigen:
- Fig. 1: ein System in perspektivischer Explosionsdarstellung;
- Fig. 2: ein System in perspektivischer Ansicht;
- Fig. 3: das System gemäß Fig. 2 in Frontansicht ohne Frontabdeckungen;
- Fig. 4: einen Träger des Systems nach den Figuren 1 bis 3 in einer ersten perspektivischen Ansicht;
- Fig. 5: den Träger gemäß Fig. 4 in einer zweiten perspektivischen Ansicht;
- Fig. 6: den Träger gemäß den Figuren 4 und 5 in einer ersten Ansicht;
- Fig. 7: den Träger gemäß den Figuren 4 und 5 in einer Draufsicht;
- Fig. 8: den Träger gemäß den Figuren 4 und 5 in einer zweiten Ansicht;
- Fig. 9: den Träger gemäß den Figuren 4 und 5 in einer Seitenansicht;
- Fig. 10: den Träger gemäß den Figuren 4 und 5 in einer Schnittansicht entlang der Schnittlinie X-X in Fig. 6;
- Fig. 11: einen oberen Träger einer Aufnahmeeinrichtung in einer ersten perspektivischen Ansicht;
- Fig. 12: den Träger gemäß Fig. 11 in einer zweiten perspektivischen Ansicht;
- Fig. 13: den Träger gemäß den Figuren 11 und 12 in einer ersten Ansicht;
- Fig. 14: den Träger gemäß den Figuren 11 und 12 in einer Draufsicht;
- Fig. 15: den Träger gemäß den Figuren 11 und 12 in einer zweiten Ansicht;
- Fig. 16: den Träger gemäß den Figuren 11 und 12 in einer Seitenansicht;
- Fig. 17: den Träger gemäß den Figuren 11 und 12 in einer Schnittansicht entlang der Schnittlinie XVII-XVII in Fig. 13;
- Fig. 18: eine Frontabdeckung für ein System nach den Figuren 1 bis 3 in perspektivischer Ansicht und
- Fig. 19: einen Sockel für ein System nach den Figuren 1 bis 3 in perspektivischer Ansicht.

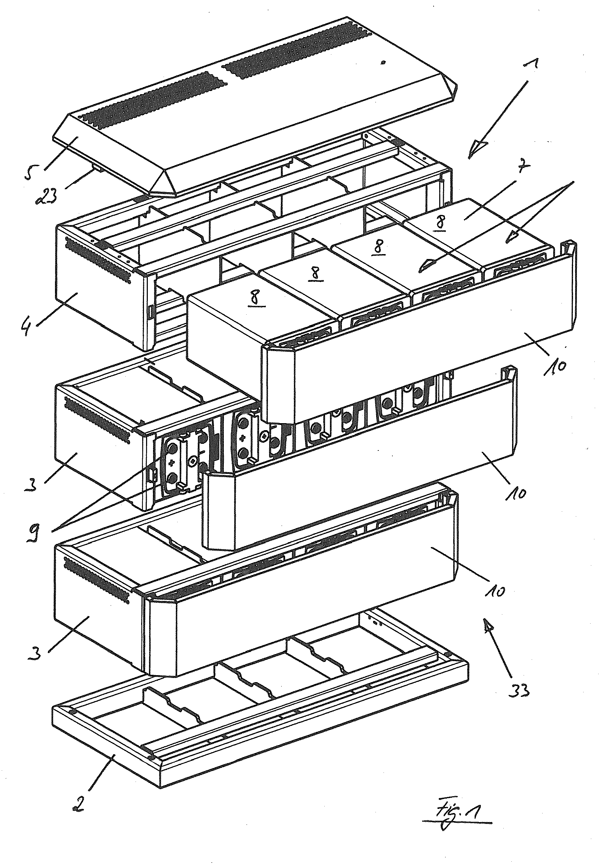

Fig. 1 zeigt ein System 1 in perspektivisch dargestellter Explosionsdarstellung. Das System 1 besteht aus einem Sockel 2 und zwei übereinander angeordneten Trägern 3 sowie einem über den beiden Trägern 3 angeordneten oberen Träger 4 und einer auf dem oberen Träger 4 angeordneten Abdeckung 5.

In den Trägern 3, 4 sind jeweils vier Energiespeicher 6 liegend angeordnet. Jeder Energiespeicher 6 besteht aus einem Gehäuse 7 mit zwei horizontal ausgerichteten Seitenwänden 8. Desweiteren sind in Fig. 1 Anschlüsse 9 im Bereich der Energiespeicher 6 zu erkennen.

Die genaue Konstruktion der einzelnen Bestandteile des Systems 1, nämlich des Sockels 2, der Träger 3 beziehungsweise 4 und der Abdeckung 5 wird nachfolgend im Zusammenhang mit den weiteren Figuren noch beschrieben.

Aus Fig. 1 ergänzend zu erkennen sind Frontabdeckungen 10, die im Bereich der Anschlüsse 9 der Energiespeicher 6 an den Trägern 3 beziehungsweise 4 lösbar befestigt sind.

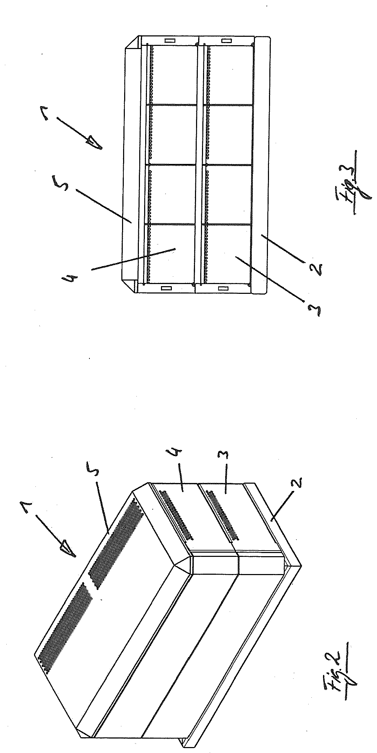

In den Fign. 2 und 3 ist ein System 1 dargestellt, welches aus dem Sockel 2, einem Träger 3 und dem oberen Träger 4 sowie der Abdeckung 5 besteht. Hierbei handelt es sich um ein System 1 welches die minimale Anzahl von Trägern 3 bzw. oberem Träger 4 aufweist. Ein solches System 1 kann bis zu elf Träger 3 aufweisen, wobei eine unterschiedliche Anzahl von Aufnahmefächern für die nicht näher dargestellten Energiespeicher 6 vorgesehen sein kann.

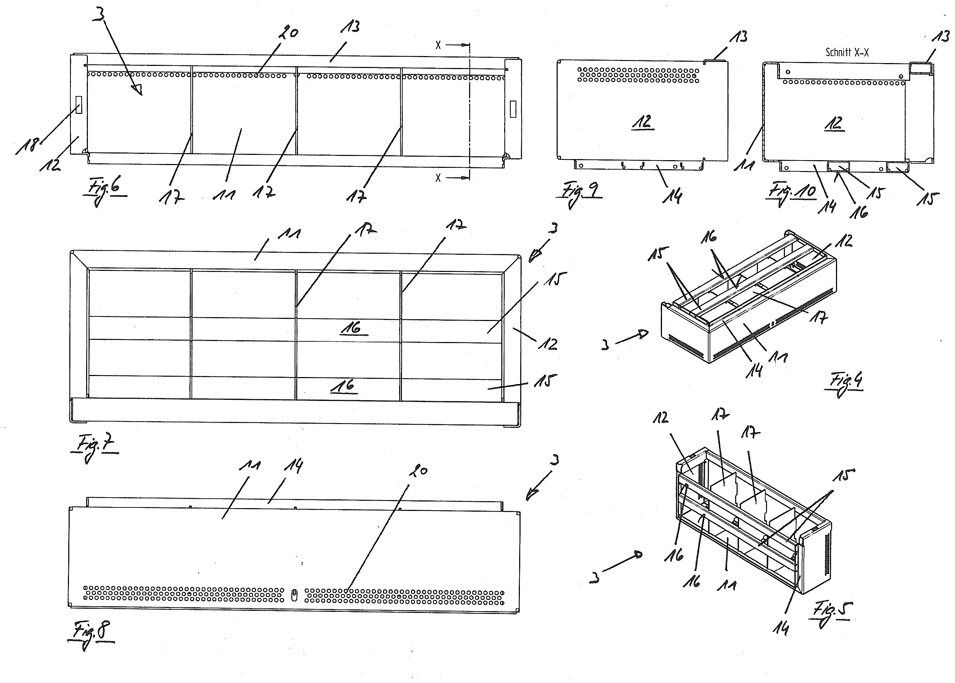

Der Träger 3 ist detailliert in den Fign. 4 bis 10 dargestellt. Jeder Träger 3 ist im Längsschnitt U-förmig ausgebildet und weist einen Steg 11 und zwei daran rechtwinklig angeordnete Schenkel 12 auf. Ergänzend ist ein Versteifungselement 13 (Fig. 5) vorgesehen, welches als Profil ausgebildet ist und die beiden freien Enden der Schenkel 12 miteinander verbindet, wobei das Versteifungselement 13 im oberen Eckbereich der Schenkel 12 angeordnet ist.

Fig. 4 zeigt die Unteransicht des Trägers 3 und es ist erkennbar, dass der Steg 11, wie auch die Schenkel 12 am unteren Kantenbereich 14 zweifach und damit L-förmig abgekantet sind, so dass sich ein nach innen verspringender Kantenbereich 14 ausbildet.

Der Versprung des Kantenbereichs 14 ist derart ausgebildet, dass die parallel zur Flächennormalen des Stegs 11 beziehungsweise der Schenkel 12 verlaufende Fläche mit einer korrespondierenden Aufnahme am gegenüberliegenden Ende des Trägers 3 übereinstimmt, so dass der Kantenbereich 14 derart in einen weiteren Träger 3 eingesetzt werden kann, dass die übereinander angeordneten Träger 3 derart miteinander verbunden sind, dass eine Relativbewegung der benachbart angeordneten Träger 3 nicht möglich ist.

Zwischen den Kantenbereichen 14 der Schenkel 12 erstrecken sich ergänzend zwei Druckelemente 15 über die gesamte Länge des Trägers 3 zwischen den aufeinander zugewandten Flächen der Kantenbereiche 14 der Schenkel 12. Die Druckelemente 15 sind als Kastenprofile ausgebildet und mit den Kantenbereichen 14 im Bereich der Schenkel 12 verschweißt. Die Druckelemente 15 schließen bündig mit den freien Kanten der Kantenbereiche 14 ab, wobei die bündig mit den Kantenbereichen der Schenkel 12 abschließende Fläche der Druckelemente 15 eine Auflagefläche 16 ausbilden, die zur Auflage auf den Seitenwänden 8 der Energiespeicher 6 bestimmt ist.

Desweiteren ist aus den Fign. 4 und 5 zu erkennen, dass der Träger 3 durch den Einsatz von plattenförmigen Trennelementen 17 in einzelne Aufnahmebereiche für die Aufnahme der Energiespeicher 6 unterteilt ist. Dargestellt sind drei Trennelemente 17, so dass insgesamt vier Aufnahmebereiche für die Energiespeicher 6 ausgebildet sind. Die Trennelemente 17 können mit der Innenfläche des Stegs 11 verbunden sein oder in dort angeordneten Führungen geführt sein. Desweiteren sind die Trennelemente 17 mit dem Verstärkungselement 13 und den Druckelementen 15 verbindbar.

Aus den Fign. 6 bis 10 sind weitergehende konstruktive Ausgestaltungen des Trägers 3 erkennbar. So zeigt Fig. 6 beispielsweise im Bereich der Stirnflächen der Schenkel 12 jeweils eine rechteckige Öffnung 18, die der Aufnahme von Verbindungselementen in Form von Rastelementen 19 an der Frontabdeckung 10 dienen. Sowohl im Steg 11, als auch in den Schenkeln 12 sind an dem dem Kantenbereich 14 abgewandten Flächenbereich eine Vielzahl von Bohrungen 20 zur Belüftung des Trägers 3 vorgesehen.

Es ist erkennbar, dass der Steg 11, wie auch die Schenkel 12 aus einem Blechelement gefertigt sind, wobei die freien Enden der Schenkel 12 um 90° abgewinkelt und aufeinander zu ausgerichtet sind. Ergänzend können Eckverbinder vorgesehen sein, die das jeweilige freie Ende der Schenkel 12 aussteifen, wobei die Eckverbinder beispielsweise als Profilelemente, in Form von Kastenprofilen ausgebildet sein können.

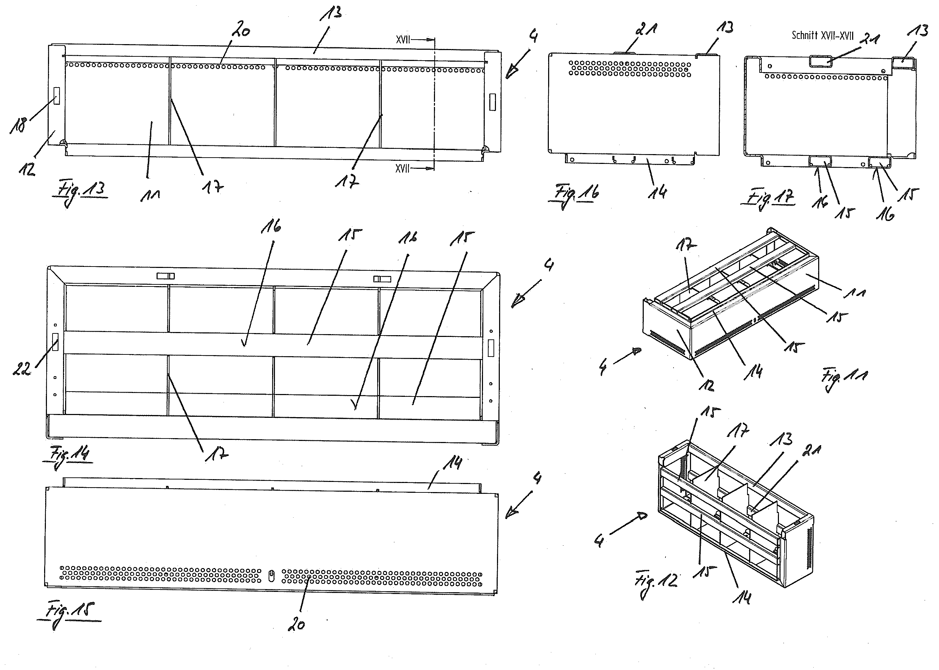

Die Fign. 11 bis 17 zeigen den oberen Träger 4 in verschiedenen Ansichten. Im Wesentlichen stimmt die Konstruktion des oberen Trägers 4 mit der Konstruktion der Träger 3 überein, die unterhalb des oberen Trägers 4 angeordnet werden. Demzufolge sind übereinstimmende Konstruktionselemente mit übereinstimmenden Bezugsziffern bezeichnet.

Der obere Träger 4 weist ergänzend gegenüber den Trägern 3 ein zweites Versteifungselement 21 auf, welches ebenfalls als Kastenprofil ausgebildet ist und parallel zum Versteifungselement 13 verläuft, wobei das Versteifungselement 21 sich ebenfalls zwischen den beiden Schenkeln 12 erstreckt und hierbei im Wesentlichen einen Abstand zum Versteifungselement 13 aufweist, der mit dem Abstand des zweiten Versteifungselements 21 zum Steg 11 übereinstimmt. Das Versteifungselement 21 dient zudem als Druckelement. Im endmontierten Zustand drücken vom oberen Träger 4 aufgenommene Energiespeicher 6 von unten gegen das als Druckelement dienende Versteifungselement 21. Ein unerwünschtes Ausbeulen der Energiespeicher 6 ist so verhindert. Dabei weist nur ein oberer Träger 4 und nicht ein unterer Träger 3 ein solches Versteifungselement 21 auf, denn liegt im endmontierten Zustand auf einem oberen Träger 4 kein weiterer Träger auf.

Desweiteren ist bei einem Vergleich der Fign. 14 und 7 zu erkennen, dass der obere Träger 4 im Bereich der Kantenbereiche 14 der Schenkel 12 und des Stegs 11 vier Öffnungen 22 aufweist, die der Aufnahme von Rastelementen 23 der Abdeckung 5 dienen. Die Rastelemente 23 sind beispielsweise in der Fig. 1 zu erkennen.

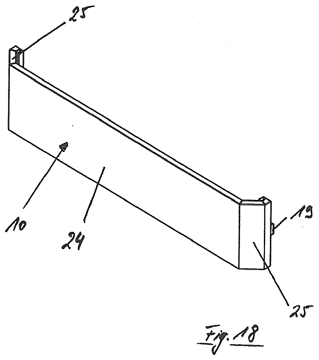

In Fig. 18 ist die Frontabdeckung 10 in perspektivischer Ansicht dargestellt. Die Frontabdeckung 10 ist im Längsschnitt im Wesentlichen U-förmig ausgebildet und weist einen Steg 24 und sich daran anschließend zwei zweifach abgewinkelte Schenkel 25 auf, wobei an den freien Enden der Schenkel 25 die Rastelemente 19 mittig angeordnet sind. Die Frontabdeckung 10 weist eine Elastizität auf, die es ermöglicht, die Rastelemente 19 in die Öffnungen 18 einzuführen, wobei die beiden Schenkel 25 zu diesem Zweck aufeinander zu bewegt werden, bevor die Rastelemente 19 in die Öffnung 18 eingreifen. Durch die Ausnutzung der Elastizität der Frontabdeckung 10 werden die Rastelemente 19 dann in einen Hintergriff in den Öffnungen 18 überführt. Selbstverständlich sind auch alternative Verrastungsmöglichkeiten denkbar, beispielsweise können die Rastelemente 19 als federelastische Rastlaschen ausgebildet sein.

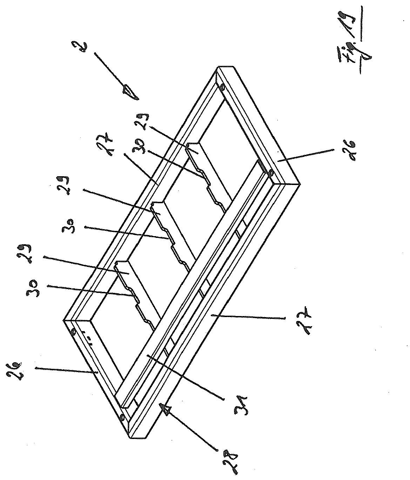

Schließlich zeigt Fig. 19 in perspektivischer Ansicht den Sockel 2. Der Sockel 2 besteht aus zwei kurzen Profilelementen 26 und zwei langen Profilelementen 27, die jeweils rechtwinklig zueinander verlaufen und einen Rahmen 28 bilden. Die beiden langen Profilelemente 27 sind durch im gleichmäßigen Abstand zueinander und zu den kurzen Profilelementen 26 verlaufende Versteifungselemente 29 verbunden, wobei die Versteifungselemente 29 in ihrem oberen Kantenbereich Ausnehmungen 30 zur Aufnahme eines Widerlagers 31 mit einer Kontaktfläche 32 aufweist. Das Widerlager 31 ist als Kastenprofil ausgebildet und schließt im Wesentlichen bündig mit dem oberen Flächenbereich der Profilelemente 26, 27 ab.

Ein Überstand im Bereich von maximal drei Millimetern kann vorgesehen sein, um die Kontaktfläche 32 mit hoher Präzision an Seitenwände 8 von Energiespeichern 6 drücken zu können, die im Träger 3 angeordnet sind, welcher Träger 3 auf den Sockel 2 aufgesetzt ist.

Die Träger 3 und der obere Träger 4 bilden eine Aufnahmeeinrichtung 33 für in die Aufnahmeeinrichtung 33 anzuordnende Energiespeicher 6. Ergänzt wird diese Aufnahmeeinrichtung 33 optional durch den Sockel 2 und die obere Abdeckung 5 sowie die Frontabdeckungen 1.

### Bezugszeichen

- 1: System
- 2: Sockel
- 3: Träger
- 4: oberer Träger
- 5: Abdeckung
- 6: Energiespeicher
- 7: Gehäuse
- 8: Seitenwand
- 9: Anschluss
- 10: Frontabdeckung
- 11: Steg
- 12: Schenkel
- 13: Versteifungselement
- 14: Kantenbereich
- 15: Druckelement
- 16: Auflagefläche
- 17: Trennelement
- 18: Öffnung
- 19: Rastelement
- 20: Bohrung
- 21: Versteifungselement
- 22: Öffnung
- 23: Rastelement
- 24: Steg
- 25: Schenkel
- 26: Profilelement
- 27: Profilelement
- 28: Rahmen
- 29: Versteifungselement
- 30: Ausnehmung
- 31: Widerlager
- 32: Kontaktfläche
- 33: Aufnahmeeinrichtung

## Patentansprüche

1. System bestehend aus
einer Aufnahmeeinrichtung (33) und
in der Aufnahmeeinrichtung (33) anzuordnenden Energiespeichern (6), insbesondere wiederaufladbare Batterien, jeweils mit einem, Seitenwände (8) aufweisenden Gehäuse (7), in dem zu den Seitenwänden (8) parallel verlaufend ausgerichtete Elektrodenplatten und einen gebundenen Elektrolyt aufweisende Vliese angeordnet sind, wobei die Elektrodenplatten zwischen benachbarten Vliesen angeordnet sind,
wobei die Aufnahmeeinrichtung (33) aus zumindest zwei übereinander angeordneten Trägern (3, 4) für die Aufnahme von Energiespeichern (6) in der Art besteht, dass die parallel zu den Elektrodenplatten ausgerichteten Seitenwände (8) der Gehäuse (7) horizontal verlaufend ausgerichtet sind und
wobei zwischen den Trägern (3, 4) zumindest ein Druckelement (15) angeordnet ist, das auf den Seitenwänden (8) der Gehäuse (7) der Energiespeicher (6) aufliegt und zumindest eine Gewichtskraft der in der Aufnahmeeinrichtung (33) oben angeordneten Energiespeicher (6) auf Energiespeicher (6) überträgt, die unterhalb der oben angeordneten Energiespeicher (6) angeordnet sind, wobei die Träger (3, 4) im Längsschnitt U-förmig ausgebildet sind und jeweils einen Steg (11) und zwei daran rechtwinklig angeordnete Schenkel (12) aufweisen, die über ein Aussteifungselement (13) verbunden sind, wobei das Druckelement (15) als in Längsrichtung des Trägers (3, 4) zwischen den Schenkeln (12) angeordnetes Profilelement ausgebildet ist, welches zumindest eine Kontaktfläche zur Auflage auf den Seitenwänden (8) der Energiespeicher (6) aufweist.

2. System nach Anspruch 1, **dadurch gekennzeichnet, dass** der Träger (3, 4) in einzelne Aufnahmefächer für die Energiespeicher (6) unterteilt ist, wobei zwischen den Aufnahmefächer insbesondere plattenförmige Trennelement (17) angeordnet sind.

3. System nach einem der Ansprüche 1 bis 2, **dadurch gekennzeichnet, dass** übereinander angeordnete Träger (3, 4) derart miteinander verbindbar sind, dass eine Relativbewegung der benachbart angeordneten Träger (3, 4) ausgeschlossen ist.

4. System nach Anspruch 3, **dadurch gekennzeichnet, dass** die übereinander angeordneten Träger (3, 4) formschlüssig ineinander greifende Verbindungselemente, insbesondere vorspringende Kantenbereiche (14) und korrespondierende Aufnahmen aufweisen.

5. System nach einem der Ansprüche 1 bis 4, **dadurch gekennzeichnet, dass** oberhalb des obersten Trägers (4) der Aufnahmeeinrichtung (33) eine Abdeckung (5) angeordnet ist, die ein Druckelement aufweist ist, das auf den Seitenwänden (8) der Energiespeicher (6) im obersten Träger (4) aufliegt und eine Gewichtskraft der Abdeckung (5) zumindest auf die Energiespeicher (6) im obersten Träger (4) überträgt.

6. System nach einem der Ansprüche 1 bis 5, **dadurch gekennzeichnet, dass** die Träger (3, 4) im Bereich von freien Enden der Schenkel (12) mit einer Frontabdeckung (10) verschließbar sind.

7. System nach einem der Ansprüche 1 bis 6, **dadurch gekennzeichnet, dass** die Aufnahmeeinrichtung (33) einen Sockel (2) aufweist, der unter dem Träger (3) angeordnet ist und der ein Widerlager (31) mit einer Kontaktfläche (32) für die in dem auf dem Sockel (2) angeordneten Träger (3) angeordneten Energiespeicher (6) aufweist, wobei die Kontaktfläche (32) zur Anlage an den Seitenwänden (8) der Energiespeicher (6) vorgesehen ist.

## Claims

1. A system composed of
a receiving device (33) and
energy storages (6), in particular rechargeable batteries, to be arranged in the receiving device (33), each comprising a housing (7) having side walls (8), in which housing electrode plates oriented in a parallel extension and nonwovens comprising a bound electrolyte are arranged, wherein the electrode plates are arranged between adjacent nonwovens,
wherein the receiving device (33) is composed of at least two supports (3, 4) arranged on top of each other for receiving energy storages (6) in such a way that the side walls (8) of the housings (7) that are oriented in parallel to the electrode plates are aligned in a horizontal direction and
wherein at least one pressure element (15) is placed between the supports (3, 4), which pressure element (15) rests upon the side walls (8) of the housings (7) of the energy storages (6) and at least transmits one weight force of the energy storages (6) placed on top in the receiving device (33) onto energy storages (6) which are arranged beneath the energy storages (6) placed on top, wherein the supports (3, 4) present a U-shaped longitudinal section and respectively comprise a web (11) and two legs (12) that are arranged in a right-angled manner thereon and that are connected by means of a stiffening element (13), wherein the pressure element (15) is designed as a profile element arranged between the legs (12) in the longitudinal direction of the support (3, 4), which profile element comprises at least one contact surface for resting upon the side walls (8) of the energy storages (6).

2. A system according to claim 1, **characterized in that** the support (3, 4) is divided into individual receiving compartments for the energy storages (6), wherein especially plate-shaped separation elements (17) are arranged between the receiving compartments.

3. A system according to one of the claims 1 through 2, **characterized in that** supports (3, 4) arranged on top of each other can be connected to each other such that a relative motion of the adjacently arranged supports (3, 4) is excluded.

4. A system according to claim 3, **characterized in that** the supports (3, 4) arranged on top of each other comprise connection elements that positively engage into each other, in particular projecting edge areas (14) and corresponding receiving spaces.

5. A system according to one of the claims 1 through 4, **characterized in that** a cover (5) is arranged above the top support (4) of the receiving device (33), which cover (5) comprises a pressure element which rests upon the side walls (8) of the energy storages (6) in the top support (4) and transmits a weight force of the cover (5) at least onto the energy storages (6) in the top support (4).

6. A system according to one of the claims 1 through 5, **characterized in that** the supports (3, 4) can be closed in the area of free ends of the legs (12) by means of a front cover (10).

7. A system according to one of the claims 1 through 6, **characterized in that** the receiving device (33) comprises a base (2) which is arranged beneath the support (3) and which comprises an abutment (31) with a contact surface (32) for the energy storages (6) arranged in the support (3) placed on the base (2), wherein the contact surface (32) is provided to rest closely against the side walls (8) of the energy storages (6).

## Revendications

1. Système composé
d'un dispositif de réception (33) et
d'accumulateurs d'énergie (6), notamment des piles rechargeables, à disposer dans le dispositif de réception (33), comprenant chacun un boîtier (7) comprenant des parois latérales (8), dans lequel boîtier (7) sont disposés des plaques d'électrode, qui s'étendent parallèlement, et des non-tissés comprenant un électrolyte immobilisé, les plaques d'électrode étant disposées entre des non-tissés adjacents,
dans lequel le dispositif de réception (33) consiste en au moins deux supports (3, 4) disposés l'un au-dessus de l'autre pour recevoir des accumulateurs d'énergie (6), de sorte que les parois latérales (8) du boîtier (7), qui sont orientées de manière parallèle par rapport aux plaques d'électrode, sont orientées de manière à s'étendre horizontalement et
dans lequel au moins un élément de pression (15) est disposé entre les supports (3, 4), lequel élément de pression (15) s'appuie sur les parois latérales (8) des boîtiers (7) des accumulateurs d'énergie (6) et transmet au moins une force de poids des accumulateurs d'énergie (6) disposés en haut dans le dispositif de réception (33) à des accumulateurs d'énergie (6), qui se trouvent au-dessous des accumulateurs d'énergie (6) disposés en haut, dans lequel les supports (3, 4) présentent une section longitudinale en forme de U et comprennent chacun une entretoise (11) et deux branches (12), qui sont disposées de manière perpendiculaire sur celle-ci et qui sont reliées par moyen d'un élément de rigidification (13), l'élément de pression (15) étant configuré comme un élément profilé disposé entre les branches (12) dans la direction longitudinale du support (3, 4), lequel élément profilé comprend au moins une surface de contact pour s'appuyer sur les parois latérales (8) des accumulateurs d'énergie (6).

2. Système selon la revendication 1, **caractérisé en ce que** le support (3, 4) est divisé en compartiments de réception individuels pour les accumulateurs d'énergie (6), des éléments de séparation (17) notamment sous forme de plaque étant disposés entre les compartiments de réception.

3. Système selon l'une des revendications 1 à 2, **caractérisé en ce que** des supports (3, 4) disposés l'un au-dessus de l'autre sont susceptibles d'être reliés l'un à l'autre de sorte qu'un mouvement relatif des supports (3, 4) disposés de manière adjacente est exclu.

4. Système selon la revendication 3, **caractérisé en ce que** les supports (3, 4) disposés l'un au-dessus de l'autre comprennent des éléments de liaison, qui s'engagent l'un dans l'autre par coopération de formes, notamment des parties du bord faisant saillie (14) et des espaces de réception correspondants.

5. Système selon l'une des revendications 1 à 4, **caractérisé en ce qu'**une couverture (5) est disposée au-dessus du support le plus haut (4) du dispositif de réception (33), laquelle couverture (5) comprend un élément de pression, qui s'appuie sur les parois latérales (8) des accumulateurs d'énergie (6) dans le support le plus haut (4) et qui transmet une force de poids de la couverture (5) au moins aux accumulateurs d'énergie (6) dans le support le plus haut (4).

6. Système selon l'une des revendications 1 à 5, **caractérisé en ce que** les supports (3, 4) peuvent être fermés par moyen d'une couverture frontale (10) dans la région des extrémités libres des branches (12).

7. Système selon l'une des revendications 1 à 6, **caractérisé en ce que** le dispositif de réception (33) comprend un socle (2), qui est disposé au-dessous du support (3) et qui comprend une butée (31) ayant une surface de contact (32) pour les accumulateurs d'énergie (6) disposés dans le support (3) placé sur le socle (2), la surface de contact (32) étant prévue pour s'appuyer contre les parois latérales (8) des accumulateurs d'énergie (6).
